# EUROPEAN PATENT APPLICATION

(11) **EP 1 713 016 A1**
(43) Date of publication of application: **18.10.2006**
(21) Application number: 05007890.6
(22) Date of filing: 11.04.2005
(51) Int. Cl.: G06K 7/00

(54) **Card-reading device with port and protection mechanism**

(71) Applicant: Chen, I-Ming, Taipei City 116 (TW)
(72) Inventor: Chen, I-Ming, Taipei City 116 (TW)
(74) Representative: Bucher, Ralf Christian

(57) **Abstract**

A card-reading device with port and protection mechanism including an upper lid pivoted to one side of the device to close upon its top and a latch provided to the free end of the upper lid; and the latch being engaged with the side edge of the device when the upper lid closes upon its top to secure the upper lid to the top of the card-reading device to fend off ingression of foreign matters including water containment and dust while preventing a memory card plugged to the card-reading device from getting lost.

## Description

### FIELD OF THE INVENTION

The present invention relates to a card reader provided with a protection mechanism and port of the reader, and more particularly to a card reader that fends off ingression of foreign matters including water containment and dust while preventing a memory card plugged to it from being lost.

### BACKGROUND OF THE INVENTION

It is known that a card-reading device generally available in the market (e.g., card reader, MP3 player with card reading slot, pen driver with card reader, etc.) has one end provided with a port to connect to a PC; and the other end, a main unit. One or a plurality of slots to receive a plug-in by a memory card is disposed to one end of the main unit opposite to the end of the port so to connect the port to the PC for the PC to read or write data from or into the memory card plugged into the slot.

However, both of the card reading device and its port of the prior art are not provided with any protection mechanism thus to admit direct ingression of foreign matters including water containment and dust into the card reading device to damage the card reading device. Furthermore, the absence of any protection mechanism also renders the memory card plunged into the card reading device to become vulnerable to get lost.

### SUMMARY OF THE INVENTION

A primary object of the present invention is to provide a card-reading device adapted with port and protection mechanism to fend off ingression of foreign matters including water containment and dust into the card reading device while preventing a memory card plugged into the card-reading device from being lost.

To achieve the purpose, an upper lid to close upon where above the card-reading device is pivoted to one side of the card-reading device; a latch is provided to the free end of the upper lid so that when the upper lid closes upon the top of the card-reading device, the latch is engaged with the side edge of the card-reading device to secure its top.

Accordingly, the card-reading device for being secured at its top by means of the upper lid prevents ingression of foreign matters including water containment and dust into the card-reading device while preventing the memory card plugged into the card-reading device from being lost.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a perspective view of the present invention.
Fig. 2 is another perspective view of the present invention.

### DETAILED DESCRIPTION OF THE PREFERRED EMBODIMENTS

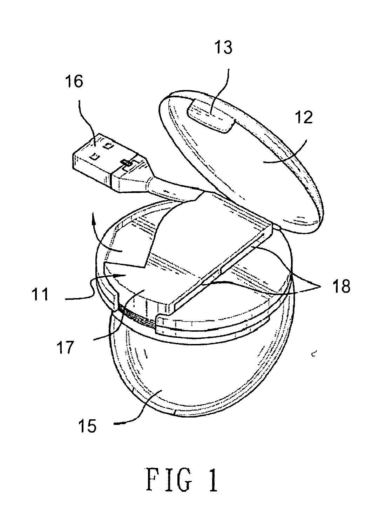

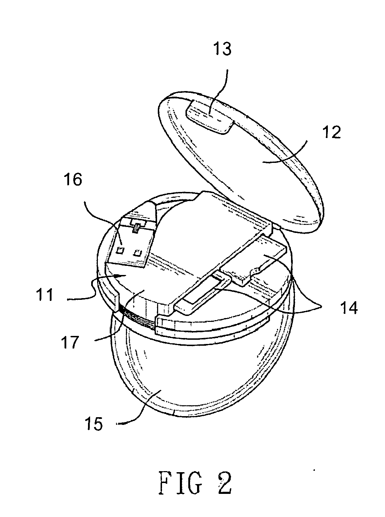

Referring to Figs. 1 and 2, an upper lid 12 is pivoted to one side of a card-reading device 11 (e.g., card reader, MP3 player with card reading slot, pen driver with card reader, etc.) and a latch 13 is disposed at the free end of the upper lid 12 so that when the upper lid 12 closes upon the top of the card-reading device 11, the latch 13 engages with the side edge of the card-reading device 11 to secure the upper lid 12 on the top of the card-reading device 11.

Accordingly, the card-reading device 11 for being secured at its top by means of the upper lid 12 prevents ingression of foreign matters including water containment and dust into the card-reading device 11 while preventing the memory card plugged into the card-reading device 11 from being lost.

As illustrated in Figs. 1 and 2, a lower lid 15 is pivoted below the card-reading device 11 to the same side that the upper lid 12 is pivoted to. The lower lid 15 closes upon the bottom of the card-reading device 11 to further prevent together with the upper lid 12 that closes upon the top of the card-reading device 11 foreign matters including water containment and dust to ingress into the card-reading device 11.

The card-reading device 11 as illustrated in Figs. 1 and 2 relates to a card reader, an MP3 provided with a card reader, or a pen driver provided with a card reader. One end of the card-reading device 11 is provided with a port 16 and a main unit 17 is provided on the other end. The main unit 17 on the end facing away from the port 16 is disposed with one or a plurality of slots 18 to connect the port 16 to a PC (not illustrated) for the PC to read or write data from or into a memory card 14 plugged into the slot 18.

## Claims

1. A card-reading device with a port and protection mechanism including an upper lid pivoted to one side of a card-reading device to close upon the top of the card-reading device and a latch provided to the free end of the upper lid; and the latch being engaged with the side edge of the card-reading device when the upper lid closes upon the top of the card-reading device to secure the upper lid to the top of the card-reading device.

2. The card-reading device with a port and protection mechanism as claimed in Claim 1, wherein a lower lid is pivoted below the card-reading device to the same side where the upper lid is pivoted to for closing upon the bottom of the card-reading device.

3. The card-reading device with a port and protection mechanism as claimed in Claim 1, wherein one end of the card-reading device is provided with a port and the other end with one or a plurality of slots to receive a plug-in by a memory card; the port being connected to a PC for the PC to read or write data from or into the memory card plugged into the slot.

4. The card-reading device with port and protection mechanism as claimed in Claim 1, wherein the card-reading device relates to a card reader.
